# EUROPÄISCHE PATENTSCHRIFT

(11) **EP 3 310 978 B1**
(45) Veröffentlichungstag und Bekanntmachung des Hinweises auf die Patenterteilung: **04.09.2019**
(21) Anmeldenummer: 16715572.0
(22) Anmeldetag: 12.04.2016
(51) Int. Cl.: E04G 21/04, F16K 3/06, E21D 11/10, F16L 55/10

(54) **SPERRANORDNUNG SOWIE SCHALUNGSELEMENT MIT EINER SOLCHEN SPERRANORDNUNG**
LOCKING ARRANGEMENT AND FORMWORK ELEMENT WITH SUCH LOCKING ARRANGEMENT
ARRANGEMENT DE BLOCAGE ET UN ÉLÉMENT DE COFFRAGE AVEC UN TEL ARRANGEMENT DE BLOCAGE

(30) Priorität: 22.06.2015 DE 202015103271 U
(43) Veröffentlichungstag der Anmeldung: 25.04.2018
(73) Patentinhaber: Kern Tunneltechnik SA, 6900 Lugano-Paradiso (CH)
(72) Erfinder: KERN, Reiner, 6900 Lugano - Paradiso (CH)
(74) Vertreter: Glück Kritzenberger Patentanwälte PartGmbB
(86) Internationale Anmeldenummer: PCT/EP2016/058023
(87) Internationale Veröffentlichungsnummer: WO 2016/206823

(56) Entgegenhaltungen:
- BE-A- 430 396
- DE-A1- 1 809 588
- DE-U1- 9 412 239
- DE-U1- 20 207 199
- JP-A- H1 068 225
- US-A- 2 781 787
- US-A- 5 520 531

## Beschreibung

Die vorliegende Erfindung betrifft ein Schalungselement mit wenigstens einer Sperranordnung, welches insbesondere für den Tunnelbau Verwendung findet.

Derartige Sperranordnungen finden im Stand der Technik Verwendung, damit an Schalungselementen vorgesehene Materialfüllstützen bei der Beschickung der Schalung mit einem Materialstrom, beispielsweise pumpfähigen Beton, bedarfsgerecht verschlossen und/oder geöffnet werden können, um damit letztlich im geschlossenen Zustand der Sperranordnung das durch den Materialstrom gebildete Füllmaterial vor einem Herauslaufen aus dem Schalungselement zu hindern, während im geöffneten Zustand der Sperranordnung eine Beschickung des Schaltungselementes mit dem Materialstrom als Füllmaterial ermöglicht wird.

Mit anderen Worten sind die bekannten Sperranordnungen dabei zwischen den Betriebsstellungen "Offen", in der das Schalungselement über beispielsweise den Materialfüllstutzen mit pumpfähigen Beton beschickt werden kann, und der weiteren Betriebsstellung "Geschlossen", in der über den Materialfüllstutzen kein pumpfähiger Beton mehr in das Schalungselement gelangen kann, verstellbar ausgebildet.

Üblicherweise wird dabei der Materialstrom, der beispielsweise durch einen zumindest teilweise fliesfähigen Beton gebildet wird, über Zuleitungen von mehreren Metern Länge an das Schalungselement gepumpt und dem Schaltungselement über den wenigstens einen vorgesehenen Materialfüllstutzen zugeführt. Findet dabei ein Wechsel von einem Materialfüllstützen des Schalungselementes zu einem weiteren Materialfüllstützen desselben oder aber eines anderen Schalungselementes statt, so muss nach dem Verschließen der Sperranordnung der noch restlich verbliebene Materialstrom der Zuleitung ungenutzterweise und umständlich entsorgt werden. Abhängig von der Länge sowie des Durchmessers der Zuleitung kann der verbleibende Materialrest der Zuleitung mitunter beträchtlich sein. Neben dem damit entstehenden Kostenfaktor für den ungenutzten Mehrverbrauch an Füllmaterial ist die Entsorgung auch umständlich, zeitaufwändig und mit weiteren, unerwünschten Kosten verbunden.

Es ist daher Aufgabe der vorliegenden Erfindung, ein Schalungselement zu entwickeln, bei der das nach dem Verschließen der Sperranordnung in der Zuleitung verbleibende Restmaterial noch seiner bestimmungsgemäßen Verwendung zugeführt werden kann, also insbesondere nicht ungenutzterweise zu entsorgt werden braucht, sondern als Füllmaterial genutzt werden kann.

Ein Schalungselement gemäß dem Oberbegriff des Anspruchs 1 ist aus der US 5,520,531 bekannt.

Die Aufgabe wird erfindungsgemäß durch ein Schalungselement mit den Merkmalen des Schutzanspruchs 1 gelöst. Vorteilhafte Weiterbildungen der Erfindung sind Gegenstand der abhängigen Schutzansprüche.

Erfindungsgemäß umfasst das Schalungselement eine Sperranordnung mit einem Durchlass, z.B. ein Durchlassrohr, für einen Materialstrom, in welchem Durchlass ein Sperrelement mit drei Abschnitten angeordnet ist, welche drei Abschnitte in drei Betriebsstellungen in den Durchlass einbringbar sind, wobei der erste Abschnitt in einer ersten Betriebsstellung den Durchlass vollständig freigibt, der zweite Abschnitt in einer zweiten Betriebsstellung den Durchlass vollständig schließt und der dritte Abschnitt in einer dritten Betriebsstellung den Durchlass teilweise sperrt.

Erfindungsgemäß weist das Sperrelement der Sperranordnung damit neben den Betriebsstellungen "Offen" und "Geschlossen" eine weitere, dritte Betriebsstellung auf, in der das Sperrelement den Durchlass nur teilweise sperrt. Besonders vorteilhaft kann damit der restlich verbleibende Materialstrom noch aus der Zuleitung dem Schalungselement zugeführt, insbesondere gepumpt werden. Dies kann beispielsweise dadurch erfolgen, indem durch die Zuleitung hindurch ein Schiebeelement gepresst wird, das in seiner Außenkontur um vorzugsweise nur wenige zehntel Millimeter kleiner ausgebildet ist als die Innenkontur der Zuleitung. Ist die Zuleitung beispielsweise rohrförmig ausgebildet, so kann das Schiebeelement insbesondere durch einen Ball gebildet werden, der durch die rohrförmige Zuleitung gepresst wird und damit den in der Zuleitung restlich verbliebene Materialstrom über die in der dritten Betriebsstellung befindlichen Sperranordnung in das Schaltungselement presst. Während des Hindurchpressens des Schiebeelementes steht damit die Sperranordnung in ihrer dritten, den Durchlass teilweise sperrenden Betriebsstellung. Der dritte Abschnitt des Sperrelementes für die teilweise Sperrung des Durchlasses ist vorzugsweise derart gewählt, dass zwar der restlich verbliebene Materialstrom der Zuleitung durch den dritten Abschnitt hindurchleitbar ist, während das Schiebelement selbst jedoch den dritten Abschnitt der Sperranordnung nicht passieren kann, weil er den Durchlass teilweise sperrt. Hierdurch bleibt das Schiebeelement an der Sperranordnung hängen und gelangt nicht in die Schalung. Anschließend kann die Sperranordnung wie aus dem Stand der Technik üblich in ihre zweite, den Durchlass vollständig sperrende Betriebsstellung gebracht werden und die nun vom verbliebenen Materialstrom befreite Zuleitung vom Materialfüllstutzen demontiert werden. Besonders vorteilhaft kann damit unterschiedlich zum Stand der Technik der in der Zuleitung befindliche Materialstrom noch seiner bestimmungsgemäßen Verwendung, nämlich als Füllmaterial des Schalungselementes, zugeführt werden.

Besonders bevorzugt weist der Durchlass eine erste sowie eine zweite Anschlussseite aufweist und dazu eingerichtet ist, den Materialstrom wenigstens von einer ersten Anschlussseite zu einer zweiten Anschlussseite hindurchzuleiten. Vorteilhafterweise kann der Durchlass rohrförmig ausgebildet sein, weil dies für Betonzuleitungen eine zuverlässige und drucksichere Konfiguration bildet.

Weiterhin vorteilhaft kann die erste Anschlussseite des Durchlasses einen Anschlussabschnitt für eine Zuleitung aufweisen, während die zweite Anschlussseite einen Anschlussflansch eines Schalungselements bzw. für eine Schalungselement aufweist.

Das Sperrelement kann durch Schlagen, z.B. mit einem Hammer, zwischen den unterschiedlichen Betriebsstellungen verstellbar sein. Alternativ kann auch Druck/Zuganordnung bzw. ein Antrieb zum Verstellen des Sperrelements an der Sperranordnung ausgebildet sein, z.B. eine am Durchlass vorgesehene Mutter, die mit einer an dem Sperrelement angeordneten Gewindestange oder vice versa zusammenwirkt, welche dann manuell oder motorisch rotierbar ist. Der Antrieb kann auch durch einen Hydraulikzylinder oder einen elektromotorischen Antrieb gebildet sein.

In einer vorteilhaften Ausführungsvariante der Erfindung kann der Durchlass einen ersten sowie einen zweiten Führungsflansch aufweisen, die parallel zueinander an dem Durchlass angeordnet sein können und zwischen welchen das Sperrelement verschwenkbar um eine Rotationsachse aufgenommen ist. Vorteilhaft kann das Sperrelement dabei quer zur Längserstreckung des Durchlasses zwischen den beiden Führungsflanschen um die Rotationsachse verschwenkbar angeordnet sein. Eine derartige Ausgestaltung ist leicht bedienbar und ist in ihrer Sperrfunktion sehr effektiv.

Nach einer weiteren Ausführungsvariante kann der Durchlass einen ersten und einen zweiten Durchlassabschnitt aufweisen, wobei der erste Führungsflansch dem ersten Durchlassabschnitt und der zweite Führungsflansch dem zweiten Durchlassabschnitt zugeordnet sein kann. Mithin kann vorteilhafterweise zwischen den beiden Führungsflanschen ein spaltartiger Zwischenraum vorgesehen sein, in dem das Sperrelement um die Rotationsachse verschwenkbar angeordnet ist. Auf diese Weise wir das Sperrelement sich geführt und ist auch bei höheren Pressdrücken betriebssicher.

Gemäß einer nochmals weiteren vorteilhaften Ausführungsvariante kann der erste und zweite Führungsflansch jeweils dreieckig ausgebildet sein und jeweils einen ersten Schenkel, einen zweiten Schenkel sowie einen dritten Schenkel aufweisen. Eine dreieckige Ausbildung erlaubt in einfacher Weise eine schwenkbare Aufnahme des Sperrelements.

Bevorzugt kann das Sperrelement ein Anschlagselement mit einem ersten und einem zweiten Anschlagsschenkel aufweisen. Vorteilhafterweise können die beiden Anschlagsschenkel einen stumpfen Winkel aufspannen. An dem Anschlagsschenkel kann das Sperrelement, z.B. mit einem Hammer leicht in die beabsichtigte Betriebsstellung geschlagen werden. Vorzugsweise haben die Anschlagschenkel eine Schlagleiste mit einer quer zum Sperrelement erstreckenden Schlagkante, die zur Aufnahme eines Druck oder Schlags zum Verschwenken des Sperrelements ausgebildet ist.

Ferner bevorzugt kann der erste Anschlagsschenkel des Anschlagelementes, vorzugsweise dessen Schlagkante, in der ersten Betriebsstellung an den jeweils zweiten Schenkel des entsprechenden Führungsflansches zur mechanischen Anlage gelangen. Damit ist die erste Betriebsstellung deutlich definiert.

Zudem kann es vorteilhaft sein, wenn der zweite Anschlagsschenkel des Anschlagelementes in der dritten Betriebsstellung an den jeweils dritten Schenkel des entsprechenden Führungsflansches zur mechanischen Anlage gelangt, womit auch diese Betriebsstellung definiert ist..

In einer wiederum weiteren Ausführungsvariante kann das Sperrelement mehrere Fixierlöcher aufweisen, in denen jeweils ein Fixierelement aufnehmbar ist, derart, dass das Sperrelement in seiner jeweiligen Betriebsstellung mechanisch fixiert ist. Auf diese Weise können alle drei Betriebsstellungen auf einfache Weise festgelegt werden, so dass aufgrund einer ungenauen Einstellung des Sperrelements keine Fehler passieren, z.B. dass der Durchlass nicht vollständig gesperrt wird, und beton aus der Schalung läuft.

Es kann auch vorgesehen sein, dass die Fixierlöcher derart an dem Sperrelement vorgesehen sind, dass die in den entsprechenden Fixierlöchern aufgenommenen Fixierelemente in der ersten bis dritten Betriebsstellung zumindest an dem zweiten oder dritten Schenkel des jeweiligen Führungsflansches zur Anlagen gelangen. Dies ist ebenfalls der Fixierung der drei Betriebsstellungen des Sperrelements zuträglich.

Gemäß einer nochmals vorteilhaften weiteren Ausführungsvariante kann das Sperrelement eine Vorderseite sowie eine Rückseite aufweisen, die parallel zueinander angeordnet und zumindest jeweils abschnittsweise plan ausgebildet sind. Auch kann das Sperrelement plattenartig und/oder kreissegmentförmig ausgebildet sein. Ein derartiges Sperrelement in Form einer Platte ist leicht herstellbar und funktionssicher.

Besonders bevorzugt kann der Abstand zwischen dem ersten Abschnitt und dem dritten Abschnitt des Sperrelementes derart ausgebildet sein, dass die aufeinander zugewandten freien Stirnflächen der beiden Durchlassabschnitte im zweiten Abschnitt in der zweiten Betriebsstellung vollständig zur Anlage an dem Sperrelement gelangen. Dabei weist der dritte Abschnitt des Sperrelementes
erfindungsgemäß wenigstens eine Durchbrechung sowie zumindest ein Rückhalteelement auf. Auch ist das wenigstens eine Rückhalteelement erfindungsgemäß als Verbindungssteg in der wenigstens einen Durchbrechung ausgebildet. Ferner kann in einer alternativen, aber nicht erfindungsgemäßen Ausführungsform die wenigstens eine Durchbrechung derart ausgebildet sein, dass sie das Rückhaltelement bildet, z.B. indem die Durchbrechung, z.B. runde Öffnung, gegenüber dem Durchlass durchmesserreduziert ist. Dies stellen unterschiedliche Ausführungsformen für den dritten Abschnitt dar, die ein Schiebeelement, z.B. Ball, an der Sperranordnung abfangen, so dass es nicht in die Schalung gelangt.

Ausdrücke, wie "im Wesentlichen" bzw. "etwa", bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Zudem ergeben sich Weiterbildungen, Vorteile und Anwendungsmöglichkeiten der Erfindung auch aus der nachfolgenden Beschreibung von Ausführungsbeispielen und aus den Figuren. Auch wird der Inhalt der Ansprüche zu einem Bestandteil der Beschreibung gemacht.

Die Erfindung wird nachfolgend beispielsweise anhand der schematischen Zeichnung beschrieben. In dieser zeigen:
- Fig. 1: eine schematische Perspektivansicht einer Sperranordnung in einer dritten Betriebsstellung eines nicht dargestellten erfindungsgemäßen Schalungselementes;
- Fig. 2: eine schematische Perspektivansicht eines Sperrelements der Sperranordnung gemäß Figur 1.

Für gleiche oder gleich wirkende Elemente der Erfindung werden in den Figuren identische Bezugszeichen verwendet. Ferner werden der Übersichtlichkeit halber nur Bezugszeichen in den einzelnen Figuren dargestellt, die für die Beschreibung der jeweiligen Figur erforderlich sind.

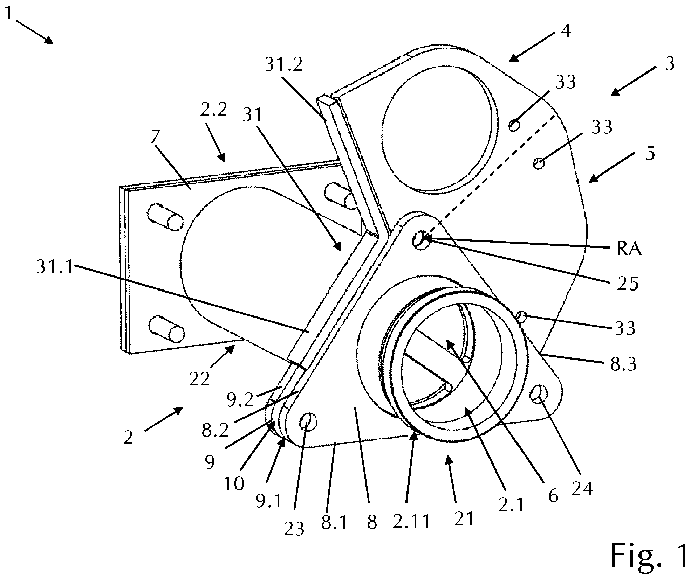

Fig. 1 zeigt in einer schematischen Perspektivansicht eine Sperranordnung 1, wie sie an Schalungselementen beispielsweise für den Tunnelbau Verwendung findet. Bei dem erfindungsgemäßen Schalungselement kann es sich dabei um ein dem Fachmann aus dem Stand der Technik bekanntes Schalungselement handeln, welches für eine Beschickung mit einem Füllmaterial, beispielsweise einem pumpfähigen Beton, zumindest einen Materialfüllstutzen aufweist, über den das Füllmaterial dem Schalungselement zuführbar ist.

Die Sperranordnung 1 umfasst einen Durchlass in Form eines Durchlassrohrs 2 für einen nicht näher dargestellten Materialstrom, beispielweise einem pumpfähigen Beton, in welchem Durchlassrohr 2 ein Sperrelement 3 mit drei Abschnitten 4, 5 und 6 angeordnet ist, welche drei Abschnitte 4, 5 und 6 in drei Betriebsstellungen BS1, BS2 und BS3 in den Durchlassrohr 2 einbringbar sind, wobei der erste Abschnitt 4 in einer ersten Betriebsstellung BS1 das Durchlassrohr 2 vollständig freigibt, der zweite Abschnitt 5 in einer zweiten Betriebsstellung BS2 das Durchlassrohr 2 vollständig schließt und der dritte Abschnitt 6 in einer dritten Betriebsstellung BS3 das Durchlassrohr 2 teilweise sperrt.

Figur 1 zeigt die Sperranordnung 1 dabei in einer dritten Betriebsstellung BS3, in der das Durchlassrohr 2 teilweise gesperrt ist. In dieser Stellung hindert es ein Schiebe- oder Reinigungselement, z.B. einen in einer Betonzuführleitung angeordneten Ball, daran, von der Zufuhrleitung in die Betonschalung zu gelangen. Auf diese Weise kann z.B. der in der Zufuhrleitung befindlicher Beton in mit dem Ball in die Schalung geschoben werden, so dass in der Zufuhrleitung kein Restbeton verbleibt.

In einer Ausführungsvariante kann die Sperranordnung 1 dabei mittels eines Anschlussflansches 7 an einem nicht näher dargestellten Materialfüllstutzen des ebenfalls nicht gezeigten Schalungselements angeflanscht sein. Alternativ ist es auch möglich, dass die Sperranordnung 1 mit ihrem Durchlassrohr 2 den Materialfüllstutzen bildet und mittels des Anschlussflansches 7 unmittelbar an einer Öffnung des Schalungselements angeflanscht ist. Hierfür kann das Durchlassrohr 2 mit vorzugsweise kreisrunden Durchmesser ausgebildet und dazu eingerichtet sein, im Inneren den Materialfluss beispielsweise von einer ersten Anschlussseite 2.1 zu einer zweiten Anschlussseite 2.2 hindurchzuleiten. Die erste Anschlussseite 2.1 kann dabei einen Anschlussabschnitt 2.11 für insbesondere eine Zuleitung aufweisen, die vorzugsweise auf den Anschlussabschnitt 2.11 aufschiebbar oder an diesen anflanschbar ist und mittels der der Materialfluss der Sperranordnung 1 zugeleitet werden kann, während im Bereich der zweiten Anschlussseite 2.2 der Anschlussflansch 7 für das Schalungselement vorgesehen ist. Beispielweise kann der Anschlussflansch 7 im Bereich der zweiten Anschlussseite 2.2 mit bzw. an dem Durchlassrohr 2 fest verbunden, also mechanisch fixiert, beispielweise verschweißt, verlötet oder verklebt sein. Es ist auch denkbar, dass der Anschlussflansch 7 mit dem Durchlassrohr 2 einstückig ausgebildet ist.

Zudem weist das Durchlassrohr 2 einen ersten sowie einen zweiten Führungsflansch 8 und 9 auf, die parallel oder näherungsweise parallel zueinander an dem Durchlassrohr 2 angeordnet sind und zwischen welchen das Sperrelement 3 verschwenkbar um eine Rotationsachse RA aufgenommen und zwischen den beiden Führungsflanschen 8 und 9 rotativ und parallel zu den Führungsflanschen 8, 9 geführt ist. Mit anderen Worten bildet sich also zwischen den beiden Führungsflanschen 8, 9 eine Schwenkebene für das Sperrelement 3 aus, das an den Führungsflanschen 8, 9 um die Rotationsachse RA verschwenkbar angeordnet ist. Vorzugsweise ist die Schwenkebene und damit das Sperrelement 3 selbst quer zur Längserstreckung des Durchlasses 2 orientiert ausgebildet, d.h. die Schwenkachse vorzugsweise parallel zur Achse des Durchlassrohrs.

Das Durchlassrohr 2 weist dabei einen ersten Durchlassabschnitt 21 sowie einen zweiten Durchlassabschnitt 22 auf, wobei der erste Führungsflansch 8 dem ersten Durchlassabschnitt 21 und der zweite Führungsflansch 9 dem zweiten Durchlassabschnitt 22 zugeordnet ist. Insbesondere sind die beiden Führungsflansche 8, 9 mit bzw. an dem entsprechenden Durchlassabschnitt 21, 22 mechanisch fixiert, beispielweise verschweißt, verlötet, verschraubt oder verklebt. Alternativ ist es jedoch auch möglich, die entsprechenden Führungsflansche 8, 9 mit dem jeweiligen Durchlassabschnitt 21, 22 einstückig auszubilden.

Vorzugsweise weisen die beiden Durchlassabschnitte 21, 22 an ihren aufeinander zu zeigenden freien Stirnseiten eine in ihren jeweiligen geometrischen Abmessungen nahezu identische Innenkontur auf. In der in Figur 1 dargestellten Ausführungsvariante weisen die beiden Durchlassabschnitte 21, 22 einen jeweils nahezu identischen Rohrdurchmesser sowie eine nahezu identische Wandstärke auf und sind an den aufeinander zu zeigenden freien Stirnseiten entsprechend fluchtend zueinander angeordnet, so dass sich eine möglichst homogene Durchströmung im Übergangsbereich der beiden Durchlassabschnitte 21, 22 ausbildet.

Zwischen den beiden aufeinander zu zeigenden freien Stirnseiten der Durchlassabschnitte 21, 22 bzw. der in diesem Bereich an den entsprechenden Durchlassabschnitten 21, 22 parallel zueinander angeordneten Führungsflanschen 8, 9 ist ein spaltartiger Zwischenraum 10 vorgesehen, in dem das Sperrelement 3 wie oben stehend erläutert dazwischenliegend verschwenkbar geführt ist. Dabei füllt das Sperrelement 3 in seiner Breitenabmessung den spaltartigen Zwischenraum 10 vollständig aus, und zwar derart, dass das Sperrelement 3 beidseitig an dem ersten und zweiten Durchlassabschnitt 21, 22, insbesondere an deren entsprechenden aufeinander zu zeigenden freien Stirnseiten, bzw. dem jeweils zugehörigen Führungsflansch 8, 9 mechanisch zur Anlage gelangt.

Zueinander mechanisch fixiert werden die beiden Durchlassabschnitte 21, 22 über deren jeweiligen Führungsflansch 8, 9, die über beispielweise ein nicht dargestelltes Fixier- bzw. Arretiermittel miteinander verbunden werden. Hierfür weisen die entsprechenden Führungsflansche 8, 9 jeweils gegenüberliegende Löcher 23, 24, 25 auf, von denen in der Figur 1 nur die Löcher 23, 24, 25 des ersten Führungsflansches 8 zu erkennen sind, in die ein entsprechendes Fixier- bzw. Arretiermittel, beispielsweise ein Arretierbolzen, Arretierstift, Steck- oder Schraubverbindungsmittel, eingeführt und fixiert werden kann. Diese Stifte oder Bolzen können im Spaltbereich ein durchmesser-vergrößertes Distanzelement, z.B. einen Distanzring, aufweisen, um die Stärke des Spaltes 10 zu definieren. Der Stift in dem oberen Loch 25 bildet die Schwenkachse RA des Sperrelements 3. Ein Distanzelement ist dort nicht unbedingt nötig, da der Abstand durch das Sperrelement 3 gewahrt bleibt. Löcher im Sinne der vorliegenden Anmeldung sind das jeweilige Bauteil vollständig durchdringende Öffnungen bzw. Durchbrechungen. Mit den drei die Löcher 23, 24 , 25 durchsetzenden Stiften werden die beiden Führungsflansche 8, 9 und Durchlassabschnitte 21, 22 zueinander lagefixiert gehalten. Der Stift in dem oberen Loch 25 korrespondiert mit einem in dem Sperrelement 3 vorgesehenen Loch 26 derart, dass das die Löcher 25, 26 durchsetzende nicht dargestellte Achselement, beispielsweise eine Führungsstift, die Schwenkachse für das Sperrelement 3 bildet, so dass das Sperrelement 3 mittels des Achselementes um die Rotationsachse RA, bzw. die Löcher 25, 26, verschwenkbar ausgebildet ist.

Besonders bevorzugt sind die Führungsflansche 8, 9 dreieckig ausgebildet und weisen jeweils einen die Basis bildenden ersten Schenkel 8.1 bzw. 9.1 sowie jeweils einen zweiten Schenkel 8.2 bzw. 9.2 und einen dritten Schenkel 8.3 bzw. 9.3 auf. Dabei können vorzugsweise jeweils die beiden nicht die Basis bildenden Schenkel, also die zweiten und dritten Schenkel 8.2, 8.3 bzw. 9.2, 9.3, der als Dreieck ausgebildeten entsprechenden Führungsflansche 8, 9 jeweils als mechanischer Anschlag für ein korrespondierendes Anschlagelement 31 dienen, welches an dem Sperrelement 3 angeordnet ist. Das Anschlagselement 31 weist dabei einen ersten und zweiten Anschlagschenkel 31.1, 31.2 auf, die einteilig oder alternativ zweiteilig ausgebildet sein können und quer zur Ebene des Sperrelements 3 angeordnet sind. Bevorzugt kommt dabei der erste Anschlagschenkel 31.1 des Anschlagelementes 31 in der ersten Betriebsstellung BS1 an den jeweils zweiten Schenkeln 8.2 bzw. 9.2 des entsprechenden Führungsflansches 8, 9 zur mechanischen Anlage, während der zweite Anschlagschenkel 31.2 des Anschlagelementes 31 in der dritten Betriebsstellung BS3 an dem jeweils dritten Schenkel 8.3 bzw. 9.3 des entsprechenden Führungsflansches 8, 9 zur mechanischen Anlage gelangt. Die beiden Anschlagsschenkel 31.1, 31.2 des Anschlagelementes 31 begrenzen also in beiden möglichen Bewegungsrichtungen die maximal möglichen Rotationsbewegung bzw. Stellbewegung des Sperrelementes 3, in der sich das Sperrelement 3 gleichzeitig in einer ersten bzw. dritten Betriebsstellung BS1, BS3 befindet. Gleichzeitig dienen die Anschlagsschenkel 31.1, 31.2 als Betätigungsflächen zum Verschwenken des Sperrelements 3, z.B. mittels eines Hammers.

Die Einleitung der Stellbewegung, die in der Ausführungsvariante der Figur 1 als Rotationsbewegung ausgeführt ist, auf das Sperrelement 3 kann dabei manuell, pneumatisch oder hydraulisch erfolgen. Hierfür kann das Sperrelement 3 mit einem nicht näher dargestellten, entsprechend ausgebildeten Stellantrieb zusammenwirken, der die jeweilige Stellbewegung auf das Sperrelement 3 einleitet. Vorzugsweise kann der Stellantrieb an der Sperranordnung 1, beispielsweise an dessen Durchlass 2, angeordnet, insbesondere befestigt sein.

Statt der rotatorischen Stellbewegung des Sperrelementes 3 der Ausführungsvariante der Figur 1 ist es jedoch alternativ auch möglich, das Sperrelement 3 zwischen seinen entsprechenden Betriebsstellungen BS1...BS3 beispielsweise translatorisch zu verschieben. Beispielweise könnten hierfür an den beiden Führungsflanschen 8, 9 entsprechende Führungsschienen vorgesehen sein, an denen das Sperrelement 3 translatorisch geführt ist, und zwar verschiebbar zwischen der ersten bis dritten Betriebsstellung BS1 ...BS3.

Um das Sperrelement 3 in seiner jeweiligen Betriebsstellung BS1...BS3 mechanisch zu fixieren, also vor einer ungewollten Stellbewegung, d. h. einem Verschwenken um die Rotationsachse RA zu sichern, weist das Sperrelement 3 mehrere Fixierlöcher 33 auf, in denen jeweils ein nicht näher gezeigtes Fixierelement, beispielweise ein Fixierstift, aufnehmbar ist. Die Fixierlöcher 33 sind dabei derart an dem Sperrelement 3 vorgesehen, dass die in den entsprechenden Fixierlöchern 33 aufgenommenen Fixierelemente in der ersten bis dritten Betriebsstellung BS1 bis BS3 zumindest an dem zweiten oder dritten Schenkel 8.2, 9.2 bzw. 8.3, 9.3 des jeweiligen Führungsflanschens 8, 9 zur Anlage kommen.

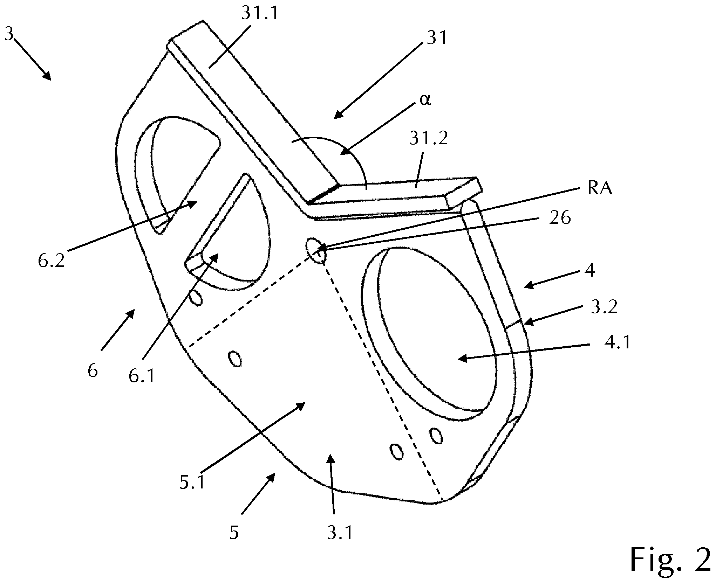

In Figur 2 ist das Sperrelement 3 der Sperranordnung 1 in einer schematischen Perspektivansicht gezeigt. Das Sperrelement 3 kann dabei plattenartig ausgebildet sein und eine von der idealen Kreisform abweichende Umfangsgeometrie aufweisen. Es versteht sich, dass die geometrische Formgestaltung der Umfangsgeometrie des Sperrelementes 3 in weiten Grenzen frei wählbar ist. Beispielsweise kann das Sperrelement in seiner Umfangsgeometrie kreisförmig, dreieckig, viereckig oder polygonal ausgebildet sein. Vorteilhafterweise weist das Sperrelement 3 eine zu einer Vorderseite 3.1 parallel und plan ausgebildete Rückseite 3.2 auf, so dass das Sperrelement 3 als ebene Platte mit einer von der idealen Kreisform abweichenden Umfangsgeometrie ausgebildet ist. Insbesondere kann das Sperrelement 3 kreissegmentförmig ausgebildet sein, wodurch eine Schwenkbewegung gut zwischen den Führungsflanschen 8,9 führbar ist. Vorzugsweise spannen die beiden Anschlagschenkel 31.1 und 31.2 des Anschlagelementes 31 einen stumpfen Winkel α auf, der damit zwischen mehr als 90° und weniger als 180°, vorzugsweise zwischen 100° und 140°, beträgt.

Vorzugsweise nehmen der erste bis dritte Abschnitt 4...6 des Sperrelementes 3 gleichgroße Oberflächenanteile der Vorder- bzw. Rückseite 3.1, 3.2 des Sperrelementes 3 ein - sind damit also gleichgroß ausgebildet.

Der erste Abschnitt 4 kann dabei vorzugsweise eine kreisrunde Durchbrechung 4.1 des Sperrelementes 3 aufweisen, die in ihrer geometrischen Formgestaltung der Innenkontur des Durchlassrohres 2, entspricht, so dass der erste Abschnitt 4 in der ersten Betriebsstellung BS1 den Durchlass 2 vollständig freigibt. Dies bedeutet, dass wenn das Durchlassrohr 2 einen Innendurchmesser von 100mm aufweist, auch die kreisförmige Durchbrechung 4.1 einen Durchmesser von 100mm aufweist. Dadurch stellt sich in der ersten Betriebsstellung BS1 eine möglichst homogegen Durchströmung des Durchlassohres 2 im Bereich des spaltartigen Zwischenraums 10 ein.

Der zweite Abschnitt 5 des Sperrelementes 3 kann dabei vorzugsweise einen Sperrabschnitt 5.1 aufweisen, so dass der zweite Abschnitt 5 in der zweiten Betriebsstellung BS2 den Durchlass 2 mittels des Sperrabschnittes 5.1 vollständig sperrt. Insbesondere kann der Sperrabschnitt 5.1 durch das plattenförmige Sperrelementes 3 selbst gebildet sein.

Der Abstand zwischen dem ersten Abschnitt 4 und dem dritten Abschnitt 7 auf dem Sperrelement 3 ist so gewählt, dass die aufeinander zugewandten freien Stirnflächen der beiden Durchlassabschnitte 21, 22 im zweiten Abschnitt vollständig zur Anlage gelangen können.

Der dritte Abschnitt 6 weist eine Durchbrechung 6.1 mit einem Rückhalteelement 6.2 auf, das zumindest teilweise in den Durchlass 2 hineinragt, so dass der dritte Abschnitt 6 in der dritten Betriebsstellung BS3 den Durchlass 2 nur teilweise freigibt. Dabei ist das Rückhalteelement 6.1 als Verbindungssteg in der vorzugsweise kreisförmigen Durchbrechung 6.1 vorgesehen.

Die Erfindung wurde voranstehend an einem Ausführungsbeispiel beschrieben. Es versteht sich, dass zahlreiche Änderungen und/oder Modifikationen des Erfindungsgegenstandes möglich sind, ohne dadurch den Erfindung zu verlassen, der durch die nachfolgenden Schutzansprüche definiert ist.

### Bezugszeichenliste

- 1: Sperranordnung
- 2: Durchlass/Durchlassrohr
- 2.1: erste Anschlussseite
- 2.11: Anschlussabschnitt
- 2.2: zweiter Anschlussabschnitt
- 3: Sperrelement
- 3.1: Vorderseite
- 3.2: Rückseite
- 4: erster Abschnitt
- 4.1: Durchbrechung
- 5: zweiter Abschnitt
- 5.1: Sperrabschnitt
- 6: dritter Abschnitt
- 6.1: Durchbrechung
- 6.2: Rückhalteelement
- 7: Anschlussflansch
- 8: erster Führungsflansch
- 8.1...8.3: erster bis dritter Schenkel
- 9: zweiter Führungsflansch
- 9.1...9.3: erster bis dritter Schenkel
- 10: Zwischenraum
- 21: erster Durchlassabschnitt
- 22: zweiter Durchlassabschnitt
- 23: Loch
- 24: Loch
- 25: Loch
- 26: Loch
- 31: Anschlagselement
- 31.1: erster Anschlagschenkel
- 31.2: zweiter Anschlagschenkel
- 33: Fixierlöcher
- BS1: erste Betriebsstellung
- BS2: zweite Betriebsstellung
- BS3: dritte Betriebsstellung
- RA: Rotationsachse
- α: Winkel

## Patentansprüche

1. Schalungselement mit wenigstens einer Sperranordnung (1), umfassend einen Durchlass (2) für einen Materialstrom, in welchem Durchlass (2) ein Sperrelement (3) mit drei Abschnitten (4, 5, 6) angeordnet ist, welche drei Abschnitte (4, 5, 6) in drei Betriebsstellungen (BS1, BS2, BS3) in den Durchlass (2) einbringbar sind, wobei der erste Abschnitt (4) in einer ersten Betriebsstellung (BS1) den Durchlass (2) vollständig freigibt, der zweite Abschnitt (5) in einer zweiten Betriebsstellung (BS2) den Durchlass (2) vollständig schließt und der dritte Abschnitt (6) in einer dritten Betriebsstellung (BS3) den Durchlass (2) teilweise sperrt, **dadurch gekennzeichnet, dass** der dritte Abschnitt (6) des Sperrelementes (3) wenigstens eine Durchbrechung (6.1) sowie zumindest ein Rückhalteelement (6.2) aufweist, wobei das Rückhalteelement (6.2) als Verbindungssteg in der wenigstens einen Durchbrechung (6.1) ausgebildet ist.

2. Schalungselement nach Anspruch 1, **dadurch gekennzeichnet, dass** der Durchlass (2) eine erste sowie eine zweite Anschlussseite (2.1, 2.2) aufweist und dazu eingerichtet ist, den Materialstrom wenigstens von einer ersten Anschlussseite (2.1) zu einer zweiten Anschlussseite (2.2) hindurchzuleiten.

3. Schalungselement nach einem der vorangehenden Ansprüche, **dadurch gekennzeichnet, dass** der Durchlass (2) einen ersten sowie einen zweiten Führungsflansch (8, 9) aufweist, die parallel zueinander an dem Durchlass (2) angeordnet sind und zwischen welchen das Sperrelement (3) verschwenkbar um eine Rotationsachse (RA) aufgenommen ist.

4. Schalungselement nach Anspruch 3, **dadurch gekennzeichnet, dass** das Sperrelement (3) quer zur Längserstreckung des Durchlasses (2) zwischen den beiden Führungsflanschen (8, 9) um die Rotationsachse (RA) verschwenkbar angeordnet ist.

5. Schalungselement nach Anspruch 3 oder 4, **dadurch gekennzeichnet, dass** der Durchlass (2) einen ersten und einen zweiten Durchlassabschnitt (21, 22) aufweist, wobei der erste Führungsflansch (8) dem ersten Durchlassabschnitt (21) und der zweite Führungsflansch (9) dem zweiten Durchlassabschnitt (9) zugeordnet ist.

6. Schalungselement nach einem der Ansprüche 3 bis 5, **dadurch gekennzeichnet, dass** zwischen den beiden Führungsflanschen (8, 9) ein spaltartiger Zwischenraum (10) vorgesehen ist, in dem das Sperrelement (3) um die Rotationsachse (RA) verschwenkbar angeordnet ist.

7. Schalungselement nach einem vorangehenden Ansprüche 3 bis 6, **dadurch gekennzeichnet, dass** der erste und zweite Führungsflansch (8, 9) jeweils dreieckig ausgebildet sind und jeweils einen ersten Schenkel (8.1, 9.1), einen zweiten Schenkel (8.2, 9.2) sowie einen dritten Schenkel (8.3, 9.3) aufweisen.

8. Schalungselement nach einem der vorangehenden Ansprüche, **dadurch gekennzeichnet, dass** das Sperrelement (3) ein Anschlagselement (31) mit einem ersten und einem zweiten Anschlagsschenkel (31.1, 31.2) aufweist.

9. Schalungselement nach Anspruch 8, **dadurch gekennzeichnet, dass** die beiden Anschlagsschenkel (31.1, 31.2) einen stumpfen Winkel (a) aufspannen.

10. Schalungselement nach Anspruch 5 und einem der Ansprüche 8 bis 9, **dadurch gekennzeichnet, dass** der erste Anschlagsschenkel (31.1) des Anschlagelementes (31) in der ersten Betriebsstellung (BS1) an den jeweils zweiten Schenkel (8.2, 9.2) des entsprechenden Führungsflansches (8, 9) zur mechanischen Anlage gelangt.

11. Schalungselement nach Anspruch 5 und einem der Ansprüche 8 bis 10, **dadurch gekennzeichnet, dass** der zweite Anschlagsschenkel (31.2) des Anschlagelementes (31) in der dritten Betriebsstellung (BS3) an den jeweils dritten Schenkel (8.3, 9.3) des entsprechenden Führungsflansches (8, 9) zur mechanischen Anlage gelangt.

12. Schalungselement nach einem der vorangehenden Ansprüche, **dadurch gekennzeichnet, dass** das Sperrelement (3) eine Vorderseite (3.1) sowie eine Rückseite (3.2) aufweist, die parallel zueinander angeordnet und zumindest jeweils abschnittsweise plan ausgebildet sind.

13. Schalungselement nach Anspruch 5 oder nach Anspruch 5 und einem der Ansprüche 6 bis 12, **dadurch gekennzeichnet, dass** der Abstand zwischen dem ersten Abschnitt (4) und dem dritten Abschnitt (6) des Sperrelementes (3) derart ausgebildet ist, dass die aufeinander zugewandten freien Stirnflächen der beiden Durchlassabschnitte (21, 22) im zweiten Abschnitt (5) in der zweiten Betriebsstellung (BS2) vollständig zur Anlage an dem Sperrelement (3) gelangen.

14. Schalungselement nach einem der vorangehenden Ansprüche, **dadurch gekennzeichnet, dass** die Sperranordung einen Antrieb zum Bewegen des Sperrelements aufweist.

## Claims

1. A formwork element with at least one barrier arrangement (1), comprising a passage (2) for a material flow, in which passage (2) a barrier element (3) with three sections (4, 5, 6) is arranged, which three sections (4, 5, 6) can be introduced into the passage (2) in three operating positions (BS1, BS2, BS3), wherein in a first operating position (BS1) the first section (4) completely opens the passage (2), in a second operating position (BS2) the second section (5) completely closes the passage (2), and in a third operating position (BS3) the third section (6) partially blocks the passage (2), **characterised in that**, the third section (6) of the barrier element (3) has at least one aperture (6.1) and at least one retaining element (6.2), wherein the retaining element (6.2) is designed as a connecting web in the at least one aperture (6.1).

2. The formwork element in accordance with claim 1, **characterised in that** the passage (2) has a first and a second connecting face (2.1, 2.2), and is designed to conduct the material flow at least from a first connecting face (2.1) to a second connecting face (2.2).

3. The formwork element in accordance with one of the preceding claims, **characterised in that** the passage (2) has a first and a second guide flange (8, 9), which are arranged parallel to one another on the passage (2), and between which the barrier element (3) is accommodated such that it can pivot about an axis of rotation (RA).

4. The formwork element in accordance with claim 3, **characterised in that**, the barrier element (3) is arranged such that it can pivot about the axis of rotation (RA) between the two guide flanges (8, 9), transverse to the longitudinal extent of the passage (2).

5. The formwork element in accordance with claim 3 or 4, **characterised in that**, the passage (2) has a first and a second passage section (21, 22), wherein the first guide flange (8) is associated with the first passage section (21), and the second guide flange (9) is associated with the second passage section (9).

6. The formwork element in accordance with one of the claims 3 to 5, **characterised in that**, an intermediate space (10) in the form of a gap is provided between the two guide flanges (8, 9), in which gap the barrier element (3) is arranged such that it can pivot about the axis of rotation (RA).

7. The formwork element in accordance with one of the preceding claims 3 to 6, **characterised in that**, the first and second guide flanges (8, 9) are each triangular in shape, and each has a first arm (8.1, 9.1), a second arm (8.2, 9.2), and a third arm (8.3, 9.3).

8. The formwork element in accordance with one of the preceding claims, **characterised in that**, the barrier element (3) has a stop element (31) with a first and a second stop arm (31.1, 31.2).

9. The formwork element in accordance with claim 8, **characterised in that**, the two stop arms (31.1, 31.2) subtend an obtuse angle (a).

10. The formwork element in accordance with claim 5, and one of the claims 8 to 9, **characterised in that**, in the first operating position (BS1) the first stop arm (31.1) of the stop element (31) comes into mechanical contact with the respective second arm (8.2, 9.2) of the corresponding guide flange (8, 9).

11. The formwork element in accordance with claim 5 and one of the claims 8 to 10, **characterised in that**, in the third operating position (BS3) the second stop arm (31.2) of the stop element (31) comes into mechanical contact with the respective third arm (8.3, 9.3) of the corresponding guide flange (8, 9).

12. The formwork element in accordance with one of the preceding claims, **characterised in that**, the barrier element (3) has a front face (3.1) and a rear face (3.2) which are arranged parallel to one another, and in each case are at least sectionally flat.

13. The formwork element in accordance with claim 5, or in accordance with claim 5 and one of the claims 6 to 12, **characterised in that**, the distance between the first section (4) and the third section (6) of the barrier element (3) is designed such that in the second operating position (BS2), the free end faces of the two passage sections (21, 22) that are facing one another, come into contact completely with the barrier element (3) in the second section (5).

14. The formwork element in accordance with one of the preceding claims, **characterised in that**, the barrier arrangement has a drive for purposes of moving the barrier element.

## Revendications

1. Élément de coffrage doté d'au moins un agencement de blocage (1), comprenant un passage (2) pour un flux de matériau, passage (2) dans lequel est disposé un élément de blocage (3) présentant trois parties (4, 5, 6), lesdites trois parties (4, 5, 6) pouvant être introduites dans le passage (2) dans trois positions de fonctionnement (BS1, BS2, BS3), la première partie (4) libérant entièrement le passage (2) dans une première position de fonctionnement (BS1), la deuxième partie (5) fermant entièrement le passage (2) dans une deuxième position de fonctionnement (BS2) et la troisième partie (6) bloquant partiellement le passage (2) dans une troisième position de fonctionnement (BS3),
**caractérisé en ce que** la troisième partie (6) de l'élément de blocage (3) comporte au moins une ouverture (6.1) ainsi qu'au moins un élément de retenue (6.2), l'élément de retenue (6.2) étant réalisé sous la forme d'un élément de liaison dans l'au moins une ouverture (6.1).

2. Élément de coffrage selon la revendication 1, **caractérisé en ce que** le passage (2) comporte un premier et un second côté de raccordement (2.1, 2.2) et est conçu pour faire passer le flux de matériau au moins d'un premier côté de raccordement (2.1) à un second côté de raccordement (2.2).

3. Élément de coffrage selon l'une des revendications précédentes, **caractérisé en ce que** le passage (2) comporte une première et une seconde bride de guidage (8, 9), qui sont disposées sur le passage (2) parallèlement l'une à l'autre et entre lesquelles l'élément de blocage (3) est reçu de manière pivotante sur un axe de rotation (RA).

4. Élément de coffrage selon la revendication 3, **caractérisé en ce que** l'élément de blocage (3) est disposé entre les deux brides de guidage (8, 9) de manière pivotante sur l'axe de rotation (RA), transversalement à l'extension longitudinale du passage (2).

5. Élément de coffrage selon la revendication 3 ou 4, **caractérisé en ce que** le passage (2) comporte une première et une seconde partie de passage (21, 22), la première bride de guidage (8) étant associée à la première partie de passage (21) et la seconde bride de guidage (9) à la seconde partie de passage (9).

6. Élément de coffrage selon l'une des revendications 3 à 5, **caractérisé en ce qu'**un espace intermédiaire (10) en forme de fente est prévu entre les deux brides de guidage (8, 9), dans lequel l'élément de blocage (3) est disposé de manière pivotante sur l'axe de rotation (RA).

7. Élément de coffrage selon l'une des revendications précédentes 3 à 6, **caractérisé en ce que** la première et la seconde bride de guidage (8, 9) sont réalisées respectivement de forme triangulaire et comportent respectivement un premier côté (8.1, 9.1), un deuxième côté (8.2, 9.2) ainsi qu'un troisième côté (8.3, 9.3).

8. Élément de coffrage selon l'une des revendications précédentes, **caractérisé en ce que** l'élément de blocage (3) comporte un élément de butée (31) doté d'un premier et d'un second côté de butée (31.1, 31.2).

9. Élément de coffrage selon la revendication 8, **caractérisé en ce que** les deux côtés de butée (31.1, 31.2) définissent un angle obtus (a).

10. Élément de coffrage selon la revendication 5 et l'une des revendications 8 et 9, **caractérisé en ce que**, dans la première position de fonctionnement (BS1), le premier côté de butée (31.1) de l'élément de butée (31) vient en appui mécanique contre le second côté (8.2, 9.2) respectif de la bride de guidage (8, 9) correspondante.

11. Élément de coffrage selon la revendication 5 et l'une des revendications 8 à 10, **caractérisé en ce que**, dans la troisième position de fonctionnement (BS3), le second côté de butée (31.2) de l'élément de butée (31) vient en appui mécanique contre le troisième côté (8.3, 9.3) respectif de la bride de guidage (8, 9) corresponda nte.

12. Élément de coffrage selon l'une des revendications précédentes, **caractérisé en ce que** l'élément de blocage (3) comporte une face avant (3.1) ainsi qu'une face arrière (3.2), qui sont disposées parallèlement l'une à l'autre et qui sont réalisées planes au moins respectivement sur certaines parties.

13. Élément de coffrage selon la revendication 5 ou selon la revendication 5 et l'une des revendications 6 à 12, **caractérisé en ce que** l'écart entre la première partie (4) et la troisième partie (6) de l'élément de blocage (3) est réalisé de telle manière que, dans la deuxième position de fonctionnement (BS2), les faces frontales libres se faisant face des deux parties de passage (21, 22) viennent complètement en appui contre l'élément de blocage (3) dans la deuxième partie (5).

14. Élément de coffrage selon l'une des revendications précédentes, **caractérisé en ce que** l'agencement de blocage comporte un entraînement destiné au déplacement de l'élément de blocage.
